## Europäisches Patentamt
## European Patent Office
## Office européen des brevets

(11) Numéro de publication: **0 004 813**
**B1**

(12) **FASCICULE DE BREVET EUROPEEN**

(45) Date de publication du fascicule de brevet: **15.07.81**

(51) Int. Cl.³: **G 02 B 23/16**

(21) Numéro de dépôt: **79400202.2**

(22) Date de dépôt: **29.03.79**

(54) Instrument optique d'observation.

(30) Priorité: **03.04.78 FR 7809729**

(43) Date de publication de la demande:
**17.10.79 Bulletin 79/21**

(45) Mention de la délivrance du brevet:
**15.07.81 Bulletin 81/28**

(84) Etats Contractants Désignés:
**BE CH DE GB IT LU NL SE**

(56) Documents cités:
**DE - A - 1 912 122**
**FR - A - 2 322 385**
**FR - A - 2 345 695**
**GB - A - 1 351 908**
**GB - A - 1 374 765**
**GB - A - 1 374 766**
**US - A - 3 497 695**
**US - A - 3 504 957**
**US - A - 3 577 205**

(73) Titulaire: **SOCIETE D'OPTIQUE, PRECISION ELECTRONIQUE ET MECANIQUE - SOPELEM**
**102 rue Chaptal**
**F-92306 Levallois-Perret (FR)**

(72) Inventeur: **Moirez, Jacques**
**8 rue Emile Deslandres**
**F-75013 Paris (FR)**

(74) Mandataire: **Saint-Martin, René et al,**
**CREUSOT-LOIRE 15 rue Pasquier**
**F-75383 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Instrument optique d'observation

La présente invention se rapporte à un instrument optique d'observation donnant d'un objet éloigné une image droite et stable malgré les mouvements perturbateurs qu'il subit.

L'observation effectuée à l'aide d'un instrument de fort grossissement est perturbée par les mouvements que subit cet instrument. Ces mouvements peuvent venir de vibrations d'origine mécanique lorsque l'instrument est monté sur un véhicule terrestre, maritime ou aérien. Ces mouvements peuvent aussi venir des mouvements propres de l'observateur si ce dernier tient l'instrument à la main.

Un système de stabilisation d'observation comprend une optique déviant les faisceaux lumineux et reliée à un système de commande restant relativement immobile dans l'espace soit du fait de son inertie propre soit du fait d'un effet gyroscopique. Le faisceau émergeant de cette optique déviatrice reste immobile par rapport à la lunette. Le faisceau incident bouge par rapport à la lunette mais l'optique déviatrice est déplacée par le système de commande de façon à compenser le déplacement de la lunette. L'optique déviatrice est disposée à un endroit approprié du trajet optique.

Il existe des instruments das lesquels on place, en avant de la lunette, une optique qui est asservie à un système de commande pour dévier les faisceaux lumineux de manière à les maintenir fixes par rapport à la lunette. Cette optique est, dans certains cas, constituée par un miroir pouvant pivoter autour d'une articulation. La position angulaire du miroir est déterminée par un gyroscope qui fournit une direction de référence, la liaison du miroir et du gyroscope étant assurée par un système de leviers transmettant les angles dans un rapport $\frac{1}{2}$. Ces instruments sont relativement compliqués. L'optique disposée à l'avant de la lunette peut, dans certains cas, être constituée par un système de prismes à angles variables.

Il existe d'autres instruments dans lesquels l'optique déviant les faisceaux lumineux fait partie de l'optique d'observation.

On connaît par le brevet américain n° 3.504.957 une lunette comprenant une lentille qui peut pivoter, en arrière de l'objectif, autour d'un point d'articulation en étant stabilisée. La brillance de l'image tend à diminuer lorsque la lentille déviatrice bouge. Aussi pour une bonne qualité optique il faut que la lentille déviatrice soit pratiquement un véhicule à plusieurs lentilles de diamètre relativement grand. Il est difficile de corriger la courbure de champ et par ailleurs la distance entre le plan objet et le plan image de cette lentille déviatrice est grande ce qui conduit à un instrument encombrant.

Il existe des instruments dans lesquels l'optique déviatrice stabilisée est constituée soit par un système de miroirs stabilisé par un dispositif pendulaire soit un prisme stabilisé par un gyroscope. Les défauts optiques augmentent avec le déplacement de l'optique déviatrice et il est difficile de corriger ces défauts.

Le brevet anglais 1.374.765 décrit un dispositif optique de stabilisation de visée utilisant un faisceau de fibres optiques dont l'entrée pivote autour d'une articulation en étant stabilisée et dont la sortie est fixe. Un système de stabilisation à gyroscope est prévu pour fournir l'effort nécessaire pour déplacer l'entrée du faisceau de fibres et vaincre la rigidité relative du faisceau.

La présente invention a pour but de fournit un instrument à visée stabilisée par un élément optique déviateur dans lequel la brillance de l'image ne varie pas quelle que soit la position stabilisée de l'élément déviateur. Cet instrument conduit à un faible encombrement grâce à l'emploi d'une galette de fibres optiques inverseuse. L'instrument permet de corriger la courbure de champ.

L'instrument selon l'invention comporte d'une part une monture dans laquelle sont montés un objectif convergent et un oculaire convergent et d'autre part un élément optique monté sur un cadre articulé à la monture par une articulation située en avant dudit élément et maintenu en position stable et il est caractérisé par le fait que cet élément optique est une galette de fibres optiques agencées de manière à donner sur la face de sortie une image renversée par rapport à l'image sur la face d'entrée qui est sensiblement au foyer de l'objectif, l'articulation étant située par rapport à l'avant de la galette à une distance sensiblement égale à la moitié de la différence de la distance focale de l'objectif et de l'épaisseur de la galette.

L'invention va maintenant être décrite avec plus de détails en se référant à des modes de réalisation donnés à titre d'exemples et représentés par les dessins annexés.

La figure 1, représente, en coupe, un mode de réalisation de l'instrument dans lequel l'inertie assure la stabilisation de la galette de fibres optiques.

La figure 2 représente, en coupe, un autre mode de réalisation de l'instrument dans lequel un gyroscope assure la stabilisation de la galette de fibres optiques.

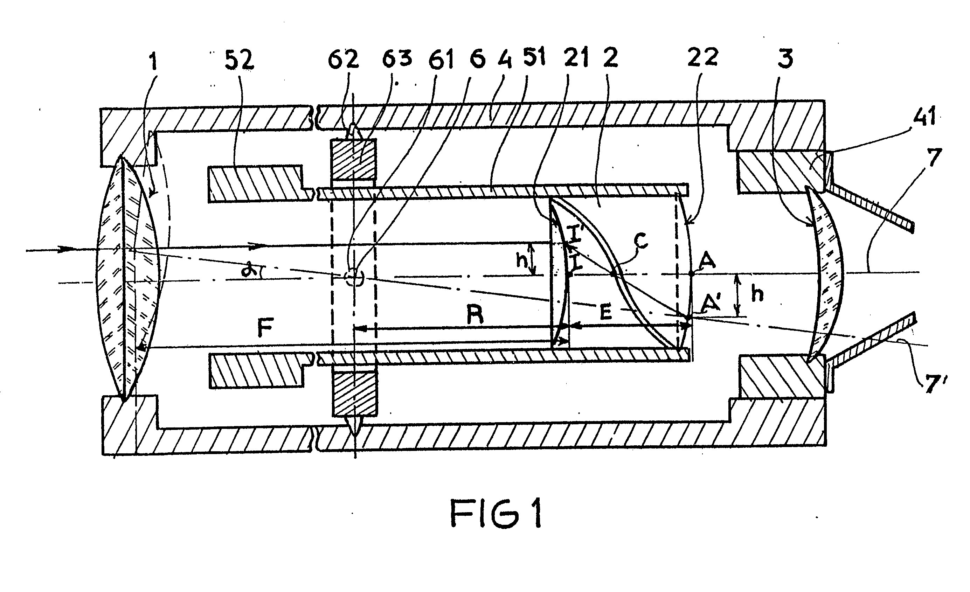

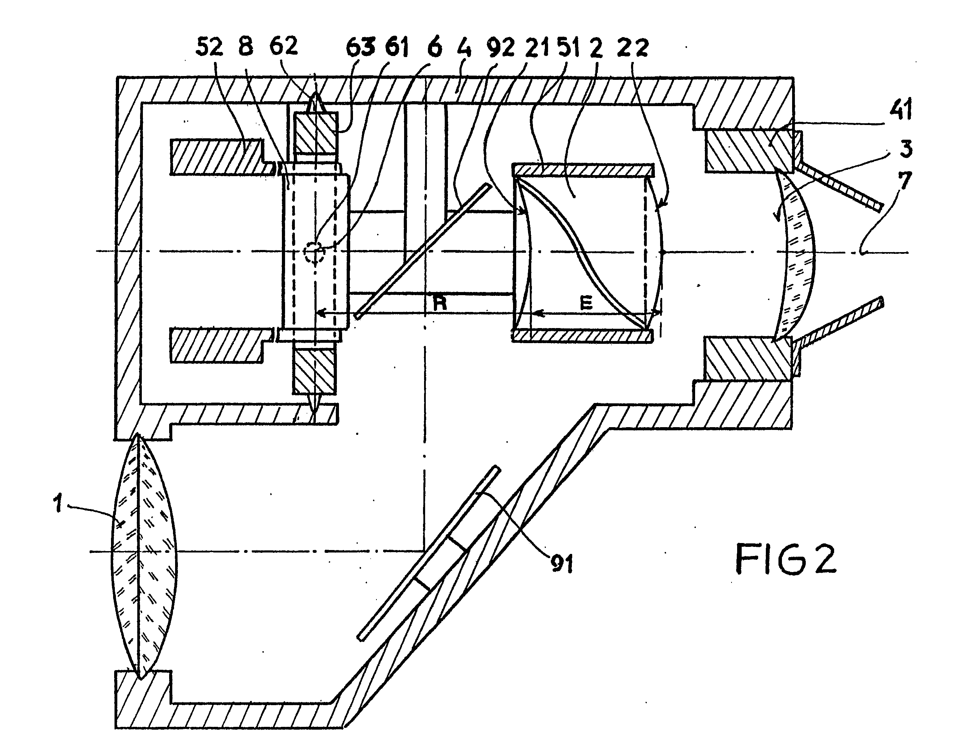

Les instruments représentés sur les figures 1 et 2 comprennent un objectif convergent 1 et un oculaire convergent 3. Cet objectif et cet oculaire sont montés dans une monture 4. L'axe optique 7 passe par les centres optiques de l'objectif et de l'oculaire. L'oculaire 3 est monté dans un tube 41 qui peut coulisser selon l'axe optique. Cet oculaire pourrait être replacé par un binoculaire.

Un élément optique 2 est disposé entre l'objectif et l'oculaire. Cet élément optique est constitué par une galette de transmission d'image, connue en soi. Cette galette est composée de fibres optiques et forme une face avant 21 faisant face à l'objectif et à la lumière incidente et une face arrière 22 faisant face à l'oculaire 3. La galette est constituée par un nombre élevé de fibres optiques de petites dimensions constituées chacune par une âme d'indice de réfraction élevé entourée par une gaine d'indice de réfraction plus faible. Ces fibres sont réunies de manière à former un assemblage serré. Chaque fibre optique comporte une extrémité aboutissant sur la face avant 21 et une extrémité aboutissant sur la face arrière 22, la lumière étant transmise de la face 21 vers la face 22. Les fibres sont vrillées de manière que chaque fibre ait une de ses extrémités sensiblement symétrique de l'autre extrémité par rapport au centre C de la galette. La galette fournit sur la face de sortie 22 une image inversée par rapport à l'image incidente arrivant sur la face d'entrée 21. La galette 2 est montée de manière que le plan image de l'objectif coïncide sensiblement avec la face d'entrée 21 ou encore de manière que cette face soit sensiblement au foyer image de cet objectif. L'objectif 1 forme, d'un objet éloigné, une image réelle renversée et située dans son plan focal image et sur la face d'entrée de la galette optique 21. La galette donne, de cette image renversée, une image droite. Cette image est observée par l'oculaire 3 qui fait office de loupe et donne une image virtuelle droite agrandie. La mise au point s'effectue par déplacement de l'oculaire 3. Il sera bien entendu avantageux que la face arrière 22 de la galette coïncide sensiblement avec le plan focal objet de l'oculaire, l'instrument étant alors afocal.

La galette 2 est réunie à la monture par l'intermédiaire d'une articulation lui donnant deux degrés de liberté tout en l'immobilisant sensiblement selon l'axe optique 7. La galette peut pivoter par rapport à la monture autour du point 6 situé sur l'axe optique de l'instrument, entre la face avant de cette galette et l'objectif. Cette articulation est de préférence une articulation du type à cardan. A cet effet le cadre porteur 51 solidaire de la galette est réuni par une articulation à axe 61 à un cadre 63 qui est lui-même réuni par une articulation à axe 62 à la monture, l'axe 62 étant perpendiculaire à l'axe 61.

La masse de la galette 2 est équilibrée par rapport au point d'articulation 6 par l'intermédiaire d'une masse d'équilibrage 52. La galette peut rester ainsi en position fixe.

L'axe passant par le centre C de la galette et le centre d'articulation 6 est immobilisé dans l'espace galiléen par un moyen approprié, en dépit des mouvements de l'instrument.

Dans le mode de réalisation de la figure 1, l'immobilisation de la galette est assurée par l'inertie de la masse de la galette et des organes attenants. Les frottements dûs à l'articulation doivent être faibles.

Dans le mode de réalisation de la figure 2, l'immobilisation est assurée par un gyroscope 8 monté directement solidaire du cadre porteur 51. L'image donnée par l'objectif est renvoyée par des miroirs 91 et 92 solidaires de la monture de l'objectif et logés entre la galette et le gyroscope.

La face avant 21 et la face arrière 22 de la galette sont des faces sphériques centrées sur le centre 6 de l'articulation qui est situé en avant de cette face 21.

Par ailleurs, l'objectif présente une courbure de champ ayant sensiblement le même rayon que celui de la face avant 21 de la galette. Cette courbure tourne, bien entendu, sa concavité, comme la face 21, vers l'avant, c'est à dire vers la lumière incidente. L'oculaire présente une courbure de champ ayant sensiblement le même rayon que celui de la face arrière 22 de la galette. Cette courbure tourne, bien entendu, sa concavité vers l'avant, c'est à dire vers la lumière incidente.

Le centre 6 de l'articulation est situé en avant de la galette, à une distance R qui correspond au rayon de la face 21 et qui est sensiblement égale à la moitié de la différence de la distance focale F de l'objectif et de l'épaisseur centrale E de cette galette. F, R et E sont donc liés par la relation $R = \frac{1}{2}(F-E)$.

Le fonctionnement de l'instrument va maintenant être expliqué. Supposons que l'ensemble de la lunette (y compris l'observateur) tourne autour du point 6, l'axe de la galette optique reste immobile. L'axe de la lunette tourne d'un angle $\alpha$ et vient dans la position 7'.

L'axe de la galette optique est maintenu selon l'axe initial 7. L'image I d'une point lointain—originalement située sur l'axe optique—vient en I', à une distance h de l'ancien axe optique telle que $h = (F-R)\,\text{tg}\,\alpha$. Le point image I correspond, à la sortie de la galette optique, au point image A situé sur l'axe 7. Le point image I' correspond, à la sortie de la galette optique, au point image A'. Ce point A' est situé à une distance h de l'axe 7 et du point A du fait que le point A' est sensiblement symétrique de I' par rapport au centre de la galette optique. Le point d'intersection de l'axe 7' avec la face de sortie de la galette est situé, par rapport à l'axe 7, à une distance $(R+E)\,\text{tg}\,\alpha$. Or comme E est lié à F et R par la relation $E = F - 2R$, la distance de ce point d'intersection, par rapport à 7, sera $(F-R)\text{tg}\,\alpha$. Ce point d'intersection sera situé à la même distance de l'axe 7 que l'image A' ce qui revient à dire que l'image A' sera sur l'axe 7'. L'image, originellement située sur l'axe optique 7, parait donc située, pour l'observateur, sur le nouvel axe optique 7'. L'image reste donc stable.

**Revendications**

1. Instrument optique d'observation comportant d'une part une monture (4) dans laquelle sont montés un objectif convergent (1) et un oculaire (3) convergent et d'autre part un élément optique (2) monté sur un cadre (51) articulé à la monture (4) par une articulation (6) située en avant dudit élément (2) et maintenu en position stable caractérisé par le fait que cet élément optique (2) est une galette de fibres optiques agencées de manière à donner sur la face de sortie (22) une image renversée par rapport à l'image sur la face d'entrée (21) qui est sensiblement au foyer de l'objectif (1), l'articulation (6) étant située par rapport à l'avant (21) de la galette à une distance (R) sensiblement égale à la moitié de la différence de la distance focale (F) de l'objectif (1) et de l'épaisseur (E) de la galette (2).

2. Instrument selon la revendication 1, caractérisé par le fait que l'objectif présente une courbure de champ ayant sensiblement le même rayon que la face avant (21), sphérique, de la galette (2) et que l'oculaire (3) présente une courbure de champ ayant sensiblement le même rayon que la face arrière (22), sphérique, de la galette (2).

3. Instrument selon l'une quelconque des revendications précédentes caractérisé par le fait que la face avant (21) et la face arrière (22) de la galette sont sphériques et centrées sur l'articulation (6) de la cette galette (2).

4. Instrument selon l'une quelconque des revendications précédentes dans lequel la galette (2) est stabilisée par un gyroscope (8) monté solidaire du cadre porteur articulé caractérisé par le fait qu'il comporte des miroirs (91—92) renvoyant l'image donnée par l'objectif (1) vers la galette (2) et logés entreladite galette (2) et le gyroscope (8).

## Claims

1. Optical observation instrument comprising on the one hand a housing (4) in which are mounted a convergent objective (1) and a converging eyepiece (3) and on the other hand an optical element (2) mounted on a frame (51) articulated onto the housing (4) by a pivot (6) situated in front of the said element (2) and maintained in a stable position, characterised in that this optical element (2) is a disc of optical fibres arranged so as to reflect onto the output surface (22) an inverted image in relation to the image on the input surface (21) which is substantially in the focus of the objective (1), the pivot (6) being positioned with regard to the front (21) of the disc at a distance (R) substantially equal to half the difference between the focal length (F) of the objective (1) and the thickness (E) of the disc (2).

2. Instrument according to Claim 1, characterised in that the objective has a curvature field having substantially the same radius as the front, spherical surface of the disc (2) and that the eyepiece (3) has a curvature field having substantially the same radius as the rear spherical surface of this disc (2).

3. Instrument according to any of the preceeding Claims, characterised by the fact that the front surface (21) and the rear surface (22) of the disc are spherical and centred on the pivot (6) of this disc (2).

4. Instrument according to any of the preceeding Claims, in which the disc (2) is stabilized by a gyroscope (8) mounted integrally with the hinged carrying frame, characterised by the fact that it has mirrors (91—92) reflecting the image given by the objective (1) towards the disc (2) and housed between the said disc (2) and the gyroscope (8).

## Patentansprüche

1. Optisches Beobachtungsinstrument mit einerseits einer Fassung (4), in der ein konvergierendes Objektiv (1) und ein konvergierendes Okular (3) angeordnet sind, und andererseits mit einem optischen Element (2), das auf einem an der Fassung (4) durch ein vor diesem Element (2) angeordneten Gelenk (6) angelenkten Rahmen (51) montiert ist und in stabiler Lage gehalten wird, dadurch gekennzeichnet, dass dieses optische Element (2) eine Scheibe aus Lichtleitfasern ist, die so angeordnet sind, dass auf der Austrittseite (22) ein Bild erscheint, das zum Bild auf der Eintrittseite (21) umgekehrt ist, die ziemlich im Brennpunkt des Objektivs (1) gelegen ist, wobei das Gelenk (6) zur Vorderseite (21) der Scheibe sich in einem Abstand (R) befindet, der ziemlich der Hälfte der Differenz zwischen der Brennweite (F) des Objektivs (1) und der Stärke (E) der Scheibe (2) entspricht.

2. Instrument nach Anspruch 1 dadurch gekennzeichnet, dass das Objectiv eine Feldkrümmung aufweist mit ziemlich gleichem Radius wie die sphärische Vorderseite (21) der Scheibe (2) und dass das Okular (3) eine Feldkrümmung mit ziemlich gleichem Radius wie die sphärische Rückseite (22) der Scheibe (2) aufweist.

3. Instrument nach einem der vorstehenden Ansprüche dadurch gekennzeichnet, dass die Vorderseite (21) und die Rückseite (22) der Scheibe sphärisch ausgebildet und auf das Gelenk (6) dieser Scheibe (2) ausgerichtet sind.

4. Instrument nach einem der vorstehenden Ansprüche, bei dem die Scheibe (2) durch ein mit dem angelenkten Tragrahmen formschlüssig verbundenen Gyroskop (8) stabilisiert wird, dadurch gekennzeichnet, dass das Instrument mit Spiegeln (91—92) ausgestattet ist, die das vom Objektiv (1) gegebene Bild zur Scheibe (2) zurückwerfen und zwischen Scheibe (2) und dem Gyroskop (8) angeordnet sind.

FIG 1

52 8 62   63 61 6 4 92 21 51 2 22

41

3

7

R

E

1

91

FIG 2

0 004 813